# EUROPÄISCHE PATENTSCHRIFT

(11) **EP 2 337 708 B1**
(45) Veröffentlichungstag und Bekanntmachung des Hinweises auf die Patenterteilung: **17.04.2013**
(21) Anmeldenummer: 09777220.6
(22) Anmeldetag: 16.07.2009
(51) Int. Cl.: B60R 13/10

(54) **ROHLING FÜR EIN KRAFTFAHRZEUGKENNZEICHEN SOWIE KRAFTFAHRZEUGKENNZEICHEN UND EIN VERFAHREN ZUR HERSTELLUNG DESSELBEN**
BLANK FOR A MOTOR VEHICLE REGISTRATION PLATE, VEHICLE REGISTRATION PLATE AND METHOD FOR PRODUCING THE SAME
ÉBAUCHE POUR PLAQUE D'IMMATRICULATION DE VÉHICULE, PLAQUE D'IMMATRICULATION DE VÉHICULE ET LEUR PROCÉDÉ DE PRODUCTION

(30) Priorität: 31.07.2008 DE 102008035589
(43) Veröffentlichungstag der Anmeldung: 29.06.2011
(73) Patentinhaber: J.H. Tönnjes E.A.S.T. GmbH & Co. KG, 27751 Delmenhorst (DE)
(72) Erfinder: BEENKEN, Björn, 27777 Ganderkesee-Rethorn (DE); BETZ, Jochen, 28211 Bremen (DE)
(74) Vertreter: Möller, Friedrich
(86) Internationale Anmeldenummer: PCT/EP2009/005157
(87) Internationale Veröffentlichungsnummer: WO 2010/012382

(56) Entgegenhaltungen:
- DE-A1- 3 209 005
- FR-A1- 2 862 417
- US-A- 2 012 346
- US-A- 2 921 395
- US-A- 6 063 458

## Beschreibung

Die Erfindung betrifft einen Rohling für ein Kraftfahrzeugkennzeichen gemäß dem Oberbegriff des Anspruchs 1. Dokument US-A-6,063,458 offenbart ein solches Kraftfahrzeugkennzeichen. Des Weiteren betrifft die Erfindung ein Kraftfahrzeugkennzeichen gemäß dem Oberbegriff des Anspruch 6 und ein Verfahren zur Herstellung eines Rohlings für ein Kraftfahrzeugkennzeichen gemäß dem Oberbegriff des Anspruchs 7.

Kraftfahrzeugkennzeichen werden aus im Fachjargon als Platinen bezeichneten Rohlingen aus Blech hergestellt. Beim Blech kann es sich um verschiedene kalt verformbare Materialen handeln, insbesondere Aluminium und Stahl, einschließlich Edelstahl. Der Rohling wird vorzugsweise aus einem Abschnitt eines längeren Blechstreifens gebildet und aus dem Abschnitt des Blechstreifens durch Ausschneiden oder Ausstanzen eines Zuschnitts hergestellt. Der Zuschnitt wird gegebenenfalls mit einer umlaufenden Randprägung und/oder mit Löchern bzw. Durchbrüchen versehen. Auch kann der Zuschnitt mit einer reflektierenden Folie versehen werden. Zuletzt wird der Zuschnitt mit individuellen Ziffern versehen, um aus dem Zuschnitt ein individuelles Kraftfahrzeugkennzeichen zu bilden.

Üblicherweise werden Kraftfahrzeugkennzeichen, insbesondere Rohlinge, aus einem Blech mit einer Dicke von etwa 1 mm gebildet. Ein solches Kraftfahrzeugkennzeichen ist in großen Bereichen überdimensioniert. Das führt dazu, dass unnötig viel Material für ein Kraftfahrzeugkennzeichen verbraucht wird.

Der Erfindung liegt die Aufgabe zugrunde, einen Rohling für ein Kraftfahrzeugkennzeichen, ein daraus hergestelltes Kraftfahrzeugkennzeichen sowie ein Verfahren zur Herstellung eines Kraftfahrzeugskennzeichen zu schaffen, welche eine Einsparung an Material zulässt.

Ein Rohling für ein Kraftfahrzeugkennzeichen zur Lösung der eingangs genannten Aufgabe weist die Merkmale des Anspruchs 1 auf. Dadurch, dass das Blech für den Rohling durch mindestens einen mehrlagigen Bereich teilweise, d. h. hinsichtlich eines Teils seiner Fläche, verstärkt ist, erhält der Rohling an stärker belasteten Bereichen ausreichende Stabilität. Dadurch können die übrigen, einlagigen Bereiche des Rohlings dünner sein. Bei diesen Bereichen handelt es sich um die weniger belasteten Bereiche des aus dem Rohling hergestellten Kraftfahrzeugkennzeichens.

Die Erfindung schafft einen Rohling für ein Kraftfahrzeugkennzeichen mit einem geringeren Materialeinsatz im Vergleich zu herkömmlichen Rohlingen, weil nur ein kleiner Teilbereich des Rohlings durch eine Mehrlagigkeit verstärkt ist und dadurch der Rohling im verstärkten Bereich die erforderte Stabilität erhält, während in den übrigen, größeren Bereichen, die geringer belastet sind, der Rohling dünner ist als herkömmliche Rohlinge.

Bevorzugt ist vorgesehen, den Rohling zur Bildung des Kraftfahrzeugkennzeichens mindestens in einem Randbereich mehrlagig auszubilden. Insbesondere sind gegenüberliegende Längsrandbereiche des Rohlings durch eine mehrlagige Gestaltung verstärkt. Die Längsrandbereiche sind besonders belastet. Deswegen ist die Verstärkung besonders wirksam, wenn sie in den Längsrandbereichen erfolgt. Dadurch erhalten die langen Ränder des Rohlings und des daraus hergestellten Kraftfahrzeugkennzeichens eine Stabilität, die mit derjenigen herkömmlicher Kraftfahrzeugkennzeichen aus dickerem Blech vergleichbar ist. Die Bildung des zwischen den äußeren Längsrandbereichen liegenden größeren Bereichs des Rohlings und des daraus hergestellten Kraftfahrzeugkennzeichens aus einer Lage eines dünneren Blechs führt aufgrund der verstärkten äußeren Längsrandbereiche zu keiner nennenswerten Beeinträchtigung der Festigkeit und der mechanischen Eigenschaften des Kraftfahrzeugkennzeichens.

Gemäß einer bevorzugten Ausgestaltung der Erfindung ist der Rohling in mindestens einem Randbereich, vorzugsweise in den gegenüberliegenden Längsrandbereichen zweilagig oder dreilagig ausgebildet. Die bevorzugt doppellagige Ausbildung der Längsrandbereiche lässt sich besonders einfach herstellen durch Umknicken schmaler Randstreifen des Blechs zur Bildung des Rohlings. In den doppellagigen Bereichen erhält der Rohling so die doppelte Wandstärke gegen über dem größeren einlagigen Mittelbereich zwischen den äußeren Längsrandbereichen. Dreilagige- Randbereiche, insbesondere Längsrandbereiche, lassen sich durch eine Z-förmige Faltung von Randstreifen des Blechs bilden. Durch das Umknicken bzw. Umfalten schmaler Längsränder des Blechs erhält der Rohling abgerundete Längskanten, von denen keine Verletzungs- oder Beschädigungsgefahr ausgeht.

Gemäß einer weiteren Ausgestaltung des erfindungsgemäßen Rohlings ist vorgesehen, dass das Blech in wenigstens einem mehrlagigen Bereich mit wenigstens einem Loch oder einer sonstigen Öffnung beziehungsweise einem Durchbruch versehen ist. Dadurch befinden sich das mindestens eine Loch oder die Öffnung in einem Bereich, in dem das Blech eine mehrfache, insbesondere eine doppelte Dicke aufweist, wodurch die Umrisse des jeweiligen Lochs oder der Öffnung so fest sind wie bei Rohlingen aus dickeren Blechen.

Erfindungsgemäß ist vorgesehen, das Blech für den Rohling mit einer Dicke zwischen 0,3 und 0,8 mm, vorzugsweise zwischen 0,4 und 0,6 mm zu versehen. Ein solches Blech verfügt selbst bei der halben Dicke des Blechs über eine vergleichbare Stabilität wie herkömmlicher Rohlinge zur Bildung von Kraftfahrzeugkennzeichen, wenn der Rohling in erfindungsgemäßer Weise bereichsweise verstärkt ist. Durch die mehrlagige Ausbildung von Längsrandbereichen weist der Rohling dort die gleiche Dicke auf wie übliche Rohlinge. Dadurch verfügen die für die Stabilität des Rohlings maßgeblichen Längsrandbereiche über die gleiche Festigkeit wie bei Rohlingen mit einer Dicke von etwa 1 mm.

Ein Kraftfahrzeugkennzeichen zur Lösung der eingangs genannten Aufgabe weist einen Rohling mit den Merkmalen der Ansprüche 1 bis 6 auf. Dieses Kraftfahrzeugkennzeichen ist bevorzugt an schmalen Längsrandbereichen verstärkt und damit mehrfach so dick wie zwischen den schmalen Längsrandbereichen, in denen der Rohling nur etwa halb so dick ist wie übliche Rohlinge.

Weil das Kraftfahrzeugkennzeichen zwischen den äußeren Längsrandbereichen dünner ist als übliche Kraftfahrzeugkennzeichen, ist der Materialaufwand deutlich geringer. Für das erfindungsgemäße Kraftfahrzeugkennzeichen ist nur etwas mehr als die Hälfte des Materials üblicher Kraftfahrzeugkennzeichen aus dickerem Blech erforderlich

Ein Verfahren zur Lösung der eingangs genannten Aufgabe weist die Maßnahmen des Anspruchs 7 auf. Dieses Verfahren sieht es vor, das Blech durch Umformen, vorzugsweise durch Kaltumformen, teilweise mehrlagig zu machen. Durch die teilweise Mehrlagigkeit erhält der aus dem Blech gebildete Rohling in besonders belasteten Bereichen eine höhere Festigkeit als in den übrigen Bereichen. Dadurch lässt sich der Rohling aus einem Blech bilden, dessen Dicke im Vergleich zu Blechen herkömmlicher Rohlinge deutlich geringer ist, beispielsweise nur die halbe Dicke aufweist, aber in den besonders belasteten Bereichen mindestens die gleiche Dicke herkömmlicher Rohlinge aufweist.

Bevorzugt wird das Blech durch einfaches oder auch zweifaches Umbiegen oder auch Falzen mindestens eines Randstreifen, insbesondere eines Längsrandstreifen doppellagig oder dreilagig gemacht. Das Umbiegen oder Falzen des mindestens einen Randstreifens kann einfach und genau erfolgen. Im einfachsten Falle wird das Blech zur Bildung des Rohlings nur einmal umgefaltet und dadurch doppellagig gemacht. In den umgefalteten Bereichen verfügt das Blech dadurch über eine doppelte Wandstärke im Vergleich zu den übrigen einlagigen Bereichen, in denen das Blech nicht umgefaltet ist.

Aus dem Blech wird nach dem Falten durch Umbiegen, Falzen oder dergleichen mindestens eines schmalen Randstreifens durch Besäumen, insbesondere ausschneiden oder Stanzen, der Zuschnitt gebildet. Nach dem Falten des Blechs erhält so der Zuschnitt seine endgültigen Außenabmessungen.

Dabei findet gemäß einer bevorzugten Ausgestaltung des Verfahrens nur ein Besäumen des Blechs an denjenigen Rändern statt, an denen das Blech nicht durch das Umfalten schmaler Längsrandstreifen umgebogen ist. Auf diese Weise bleibt der umgebogene schmale Längsrandstreifen mit der vollflächig durchgehenden Wandung des Zuschnitts einstückig verbunden. Dazu ist vorgesehen, dass das Umbiegen der schmalen Längsrandstreifen des Blechs zum Zuschnitt maßhaltig erfolgt, so dass der Abstand der nach dem Umbiegen der schmalen Längsrandstreifen entstehenden Längskanten des Zuschnitts dem vorgegebenen Abstand der Längskanten des Rohlings entspricht. Diese Längskanten brauchen dadurch nach dem Umbiegen der schmalen Längsrandstreifen nicht mehr durch Ausschneiden oder Stanzen besäumt zu werden und es bleiben die durch das Umbiegen der schmalen Längsrandstreifen entstehenden gerundeten Längskanten des.Zuschnitts erhalten.

Sofern der Rohling bzw. das daraus hergestellte Kraftfahrzeugkennzeichen Löcher und/oder Durchbrüche aufweist, werden diese gemäß einer bevorzugten Ausgestaltung des Verfahrens nach dem Umknicken bzw. Falten der schmalen Randstreifen, insbesondere der Längsrandstreifen, des Blechs hergestellt. Dadurch können sich die Löcher und/oder Durchbrüche im doppellagigen Bereich des Blechs bzw. des Zuschnitts für den Rohling befinden.

Gemäß einer Weiterbildung des Verfahrens-ist vorgesehen, Randprägungen - sofern solche vorgesehen sind - nach dem Bilden der mehrlagigen Längsrandstreifen zu bilden. Dabei befinden sich die Randprägungen bevorzugt vollständig in den Bereichen der Längsrandstreifen.

Das Besäumen des Blechs und das Stanzen der Löcher bzw. der Durchbrüche erfolgen bevorzugt in einem Arbeitsgang nach dem Umfalten der schmalen Randbereiche des Blechs. Falls das spätere Kraftfahrzeugkennzeichen eine Randprägung aufweisen soll, kann auch diese beim Besäumen des Blechs und/oder der Bildung von Löchern bzw. Durchbrüchen hergestellt werden. Es ist auch denkbar, die Randprägung des Zuschnitts nach dem Besäumen und der Bildung von Löchern und/oder Durchbrüchen herzustellen.

Ein bevorzugtes Ausführungsbeispiel der Erfindung wird nachfolgend anhand der Zeichnung näher erläutert. In dieser zeigen:

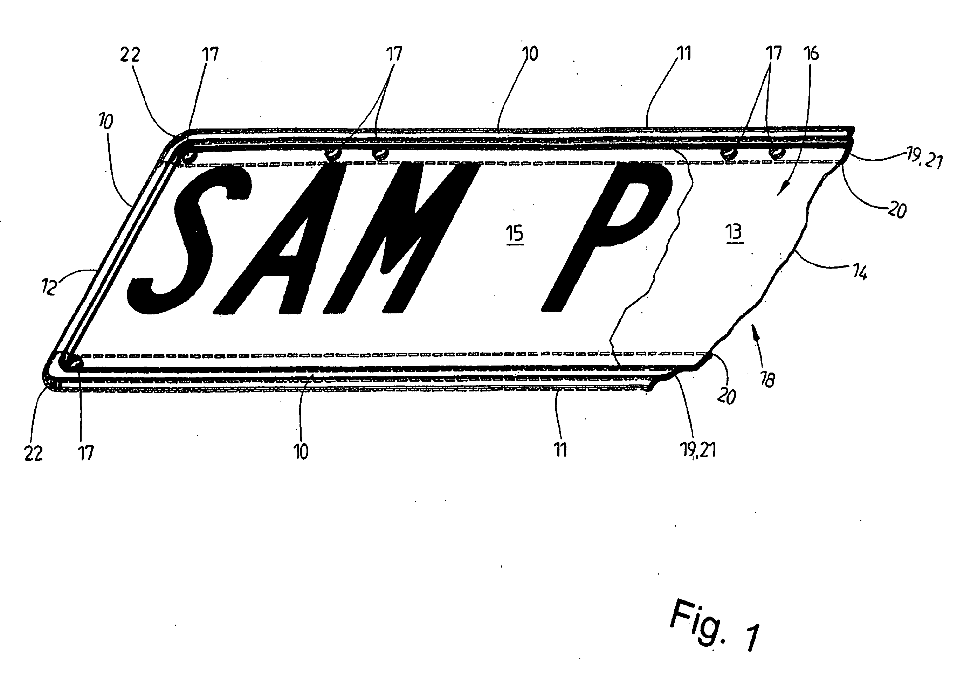

- Fig. 1: eine perspektivische Darstellung eines Teils eines Kraftfahrzeugkennzeichens,

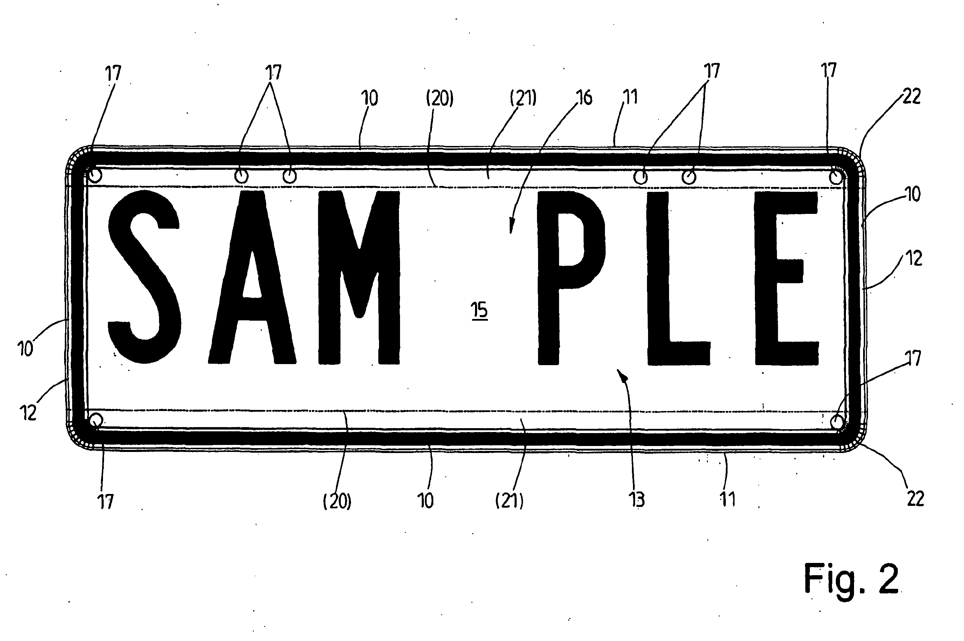

- Fig. 2: eine Draufsicht auf das Kraftfahrzeugkennzeichens, und

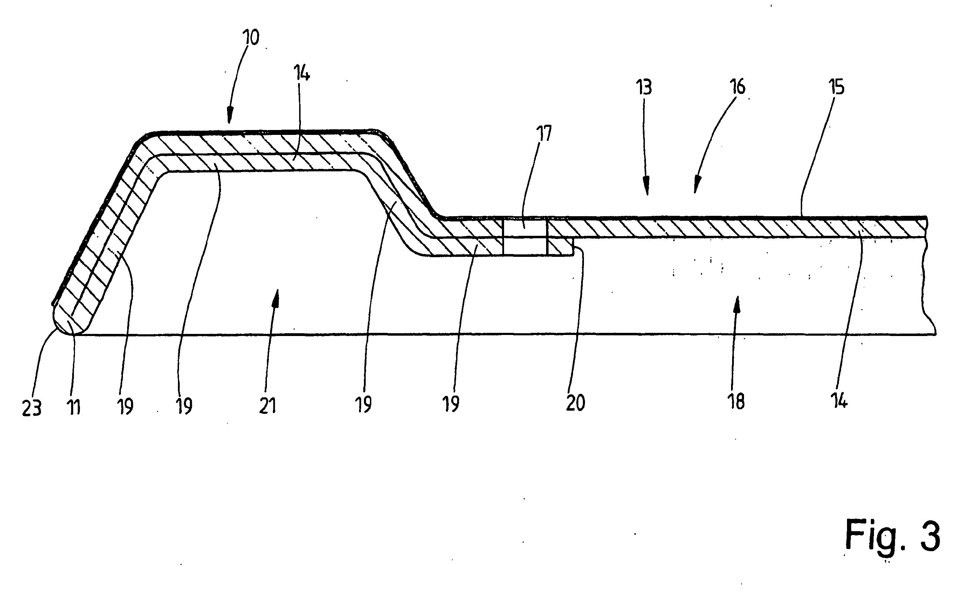

- Fig. 3: eine Einzelheit III des in der Fig. 1 dargestellten Kraftfahrzeugkennzeichens im vergrößerten Querschnitt.

In den Figuren ist ein Kraftfahrzeugkennzeichen gezeigt, das den in Deutschland geltenden Vorschriften entspricht. Das Kraftfahrzeugkennzeichen ist mit einer umlaufenden Randprägung 10 versehen. Das längliche, rechteckförmige Kraftfahrzeugkennzeichen verfügt über zwei parallele Längsränder 11 und zwei parallele kürzere Querränder 12. Die Ecken des Kraftfahrzeugkennzeichens sind mit Rundungen 22 versehen. Im von der Randprägung 10 eingeschlossenen, ebenflächigen Innenbereich 13 verfügt das Kraftfahrzeugkennzeichen über eine eingeprägte individuelle Buchstaben- und/oder Zahlenfolge. Im in den Figuren gezeigten Beispiel weist das Kraftfahrzeugkennzeichen nur Buchstaben auf, und zwar "SAM" und "PLE".

Das gezeigte Kraftfahrzeugkennzeichen ist aus einem dünnen Blech 14 aus Aluminium bzw. aus einer Aluminiumlegierung und einer Reflexfolie 15 auf der sichtbaren Vorderseite 16 des Kraftfahrzeugkennzeichens gebildet. Die Reflexfolie 15 ist auf die Vorderseite 16 des Blechs 14 dauerhaft aufgebracht, beispielsweise auflaminiert.

Das Blech 14 weist erfindungsgemäß eine gegenüber Blechen herkömmlicher Kraftfahrzeugkennzeichen verringerte Wandstärke von nur etwa 0,5 mm auf. Die Wandstärke des Blechs 14 kann auch einige Zehntel Millimeter dicker oder dünner sein. Das in den Figuren gezeigte Kraftfahrzeugkennzeichen verfügt über einige durchgehende Löcher 17 in der Nähe des Rands des Innenbereichs 13. Die Löcher 17 befinden sich somit nahe am Innenrand der Randprägung 10. Im gezeigten Ausführungsbeispiel sind vier Löcher 17 an den Ecken des Innenbereichs 13 und vier Löcher 17 am oberen Rand des Innenbereichs 13 zwischen den oberen Ecken vorgesehen. Hierauf ist die Erfindung aber nicht beschränkt.

Das Kraftfahrzeugkennzeichen kann. Löcher 17 an anderen Stellen aufweisen, vor allem mehr oder weniger als acht Löcher 17. Es ist auch denkbar, dass das Kraftfahrzeugkennzeichen über keine Löcher 17 verfügt.

Das gezeigte Kraftfahrzeugkennzeichen ist erfindungsgemäß am oberen und unteren Längsrand 11 doppellagig ausgebildet. Zu diesem Zweck befinden sich unter der Rückseite 18 des Blechs 14 des Kraftfahrzeugkennzeichens zweischmale Randstreifen 19, die aus dem Blech 14 gebildet und einstückig mit dem Blech 14 verbunden sind. Die Randstreifen 19 erstrecken sich durchgehend über den gesamten oberen und unteren Längsrand 11 des Kraftfahrzeugkennzeichens, und zwar über den gesamten Bereich der an den die Längsrändern 11 entlanglaufenden Randprägungen 10 und einem kleinen Teil des Innenbereichs 13. Im gezeigten Ausführungsbeispiel sind beide Randstreifen 19 gleich breit, verfügen nämlich etwa über die doppelte Breite der Randprägung 10. Die Randstreifen 19 erstrecken sich somit über einen Bereich, der etwa der Breite der Randprägung 10 entspricht, unter einem oberen und unteren schmalen Streifen des Innenbereichs 13. Zwischen den zueinander gerichteten Längskanten 20 der Randstreifen 13 ist der Innenbereich 13 des Kraftfahrzeugkennzeichens einlagig. Durch die Randstreifen 19 ist das Kraftfahrzeugkennzeichen in einem oberen und unteren Längsrandbereich 21 doppelwandig ausgebildet. Dadurch verfügt das erfindungsgemäße Kraftfahrzeugkennzeichen in den oberen und unteren Längsrandbereichen 21 über eine Verstärkung. In Folge der Doppelwandigkeit des Kraftfahrzeugkennzeichens in den Längsrandbereichen 21 ist das Kraftfahrzeugkennzeichen in den Längsrandbereichen 21 mit einer doppelten Wandstärke versehen. Bei der Bildung des Kraftfahrzeugkennzeichens aus dem Blech 14 mit einer Wandstärke von etwa 0,5 mm beträgt die Wandstärke in den Längsrandbereichen 21 etwa 1 mm. Hierbei handelt es sich um die Materialdicke, die bisher bei deutschen Kraftfahrzeugkennzeichen üblich ist. Hingegen verfügt das erfindungsgemäße Kraftfahrzeugkennzeichen zwischen den Längsrandbereichen 21, wo es einlagig ist, nur über eine verhältnismäßig geringe Dicke von 0,5 mm. Im Wesentlichen erstreckt sich die Einlagigkeit des Blechs 14 des Kraftfahrzeugkennzeichens über den Innenbereich 13, jedoch mit Ausnahme schmaler unterer und oberer Bereiche, wo der Innenbereich 13 von einem Teil der Randstreifen 19 zur Bildung der doppelwandigen Längsrandbereiche 21 rückseitig überdeckt ist.

Die individuelle Prägung des Kraftfahrzeugkennzeichens mit einer Buchstaben- und/oder Zahlenfolge (im gezeigten Ausführungsbeispiel "SAM" und "PLE") befindet sich ausschließlich dort, wo der Innenbereich 13 einlagig ist. Dadurch können die Buchstaben und/oder Zahlen zur Herstellung des individuellen Kraftfahrzeugkennzeichens leicht in das dünne einlagige Blech 14 des Innenbereichs 13 eingeprägt werden.

Im gezeigten Ausführungsbeispiel befinden sich die Löcher 17 am Rand des Innenbereichs 13 dort, wo die oberen und unteren Längsränder des Innenbereichs 13 durch die Randstreifen 19 doppellagig sind. Dadurch erhalten die Löcher 17 in den doppellagigen Längsrandbereichen 21 eine Verstärkung, befinden sich also genau dort, wo das Kraftfahrzeugkennzeichen doppellagig ist, wodurch die Dicke des Blechs 14 etwa 1 mm beträgt, wie das bei herkömmlichen deutschen Kraftfahrzeugkennzeichen üblich ist.

Aufgrund der doppelwandigen Längsrandbereiche 21 des Kraftfahrzeugkennzeichens befinden sich die längsgerichteten Bereiche der Randprägung 10, die an den Längsrändern 11 des Kraftfahrzeugkennzeichens entlang laufen, in den Bereichen der Verstärkung mit einer Wanddicke, die im gezeigten Ausführungsbeispiel etwa 1 mm beträgt. Hingegen sind die von den Querrändern 12 ausgehenden Querabschnitte der Randprägung 10 zwischen den Längsrandbereichen 21 im einlagigen Bereich des Kraftfahrzeugkennzeichens gebildet. Sie verfügen im gezeigten Ausführungsbeispiel deshalb nur über eine Wandstärke von etwa 0,5 mm.

Nachfolgend wird das erfindungsgemäße Verfahren zur Herstellung eines Rohlings bzw. Zuschnitts des in den Figuren gezeigten Kraftfahrzeugkennzeichens beschrieben:
Beim Rohling handelt es sich um ein im Fachjargon als Platine bezeichnetes Vorprodukt zur Herstellung des Kraftfahrzeugkennzeichens. Der Rohling unterscheidet sich vom Kraftfahrzeugkennzeichen dadurch, dass er noch mit keiner individuellen Zahlen- und Buchstabenfolge (im gezeigten Ausführungsbeispiel "SAM" und "PLE") versehen ist. Erfindungsgemäß wird der Rohling aus dem dünnen Blech 14 hergestellt, das in dem hier beschriebenen Ausführungsbeispiel eine Wandstärke von nur etwa 0,5 mm aufweist. Das Blech 14 stammt von einem quasi-endlosen Blechstreifen eines sogenannten Coils, auf dem der Blechstreifen aufgewickelt ist.

Erfindungsgemäß wird der Rohling zur Bildung des Kraftfahrzeugkennzeichens bereichsweise verstärkt, indem ausgewählte Randbereiche des-Rohlings mehrlagig ausgebildet werden. Im gezeigten Ausführungsbeispiel sind der obere und untere Längsrandbereich 21 des Rohlings zur Bildung des Kraftfahrzeugkennzeichens durch eine doppelwandige Ausbildung verstärkt. Das Blech 14 bzw. der Blechstreifen weisen in diesem Falle eine Breite auf, die der Breite des Kraftfahrzeugkennzeichens zuzüglich der Breite der beiden Randstreifen 19 entspricht.

Zur Bildung der Verstärkungen werden längs der späteren Längsränder 11 des Rohlings bzw. des Kraftfahrzeugkennzeichens obere und untere schmale Randstreifen 19 des Blechs 14 zur Rückseite 18 des Rohlings um 180° durch Umformen, insbesondere Kaltumformen, umgelegt. Man kann hierbei auch von einem Umbördeln bzw. einem Umfalten der schmalen Randstreifen 19 des Blechs 14 sprechen. Auf diese Weise kommen die Randstreifen 19 an gegenüberliegenden Längsrändern 11 des Blechs 14 dicht unter der Rückseite 18 des Rohlings zu liegen. Die Randstreifen 19 bilden auf diese Weise doppelwandige Längsrandbereiche 21 des Rohlings. An den Längsrändern 11 des Rohlings befinden sich Biegelinien, um die die Randstreifen 19 gegenüber dem dazwischen liegenden' Abschnitt des Blechs 14 um 180° umgeknickt sind. Dadurch entstehen gratlose Rundungen 23 an den Längsrändern 11 des Rohlings zur Bildung des Kraftfahrzeugkennzeichens. In den Bereichen dieser Rundungen 23 längs der an den Längsrändern 11 entlanglaufenden Biegelinien sind die Randstreifen 19 nach dem Umbiegen noch mit dem Blech 14 zur Bildung der zur Vorderseite 16 weisenden Wandung des Rohlings verbunden. Dadurch sind die Längsrandbereiche 21 integraler Bestandteil des Rohlings, nämlich einstückig verbunden mit dem Bereich des Blechs 14, der die Vorderseite 16 des Rohlings des Kraftfahrzeugkennzeichens bildet.

In einem nächsten Verfahrensschritt wird der durch Umfalten der Längsrandbereiche 21 verstärkte aber noch ebene Rohling besäumt. Dieses kann durch Stanzen oder Ausschneiden geschehen. Der Rohling wird aber nur an den Querrändem 12 besäumt, wo der Rohling einlagig ist. Außerdem werden beim Besäumen die Rundungen 22 an den Ecken des Kraftfahrzeugkenn zeichens gebildet. In den Bereichen der Längsränder 11, wo die Randstreifen 19 durch Umbiegen mit den sich über die Fläche der Vorderseite 16 erstreckenden Bereichen des Blechs 14 verbunden sind, findet kein Besäumen des Rohlings statt, damit beim Besäumen die Randstreifen 19 nicht vom Blech 14 getrennt werden. Das Besäumen des Rohlings entlang der Längsränder 11 wird dadurch überflüssig, dass die Randstreifen 19 maßhaltig umgebogen werden, indem nach dem Umfalten der Randstreifen 19 gegen die Rückseite 18 des Blechs 14 die Längsränder 11 parallel zueinander verlaufen und einen Abstand aufweisen, der der gewünschten Breite des Rohlings entspricht. Nach dem Besäumen des Blechs 14 mit den umgebogenen Randstreifen 19 ist ein noch ebenflächiger Zuschnitt zur Bildung des Rohlings für das Kraftfahrzeugkennzeichen entstanden.

Gleichzeitig mit dem Besäumen oder im Anschluss daran wird die umlaufende Randprägung 10 hergestellt. Die Randprägung 10 wird in den Bereichen der doppelrandigen Längsränder 11 und der einwandigen Querränder 12 des Zuschnitts eingeprägt. Dieses Einprägen erfolg derart, dass auf der Vorderseite 16 des Kraftfahrzeugkennzeichens die Randprägung 10 in einer gemeinsamen Ebene umläuft, also die einwandigen Querränder 12 gegenüber der doppelwandigen Längsrändern 11 nicht zurückstehen.

Die Löcher 17 können beim Besäumen des Blechs 14 mit den Randstreifen 19 gestanzt werden, insbesondere wenn das Besäumen auch durch Stanzen erfolgt. Es ist auch denkbar, die Löcher 17 zusammen mit der Randprägung 10 oder nach der Randprägung 10 zu stanzen.

Abweichend vom zuvor beschriebenen Ausführungsbeispiel können die Längsrandbereiche 21 des Kraftfahrzeugkennzeichens bzw. Rohlings auch dreilagig ausgebildet sein. Dann verfügt jeder Randstreifen 19 des Blechs 14 über die doppelte Breite des Längsrandbereichs 21. Die dreilagigen Längsrandbereiche 21 werden gebildet durch eine Z-förmige Faltung der Randstreifen 19 unter die Rückseite 18 des Blechs 14. Dabei wird jeder Randstreifen 19 mittig eingeknickt, so dass seine Breite halbiert wird auf die Breite des Längsrandbereichs 21.

Die Erfindung eignet sich für alle Arten von Kraftfahrzeugkennzeichen, auch solche die nicht aus Aluminium sondern anderen Materialen gebildet sind. Die Erfindung eignet sich auch für Kraftfahrzeugkennzeichen, die Randprägungen aufweisen, die von den in den Figuren gezeigten abweichen, oder über überhaupt keine Randprägung verfügen. Auch eignet sich die Erfindung für Kraftfahrzeugkennzeichen, die im Innenbereich 13 über keine geprägten Buchstaben und/oder Ziffern verfügen, sondern nur aufgeklebte oder aufgedruckte Ziffern und/oder Buchstaben aufweisen.

### Bezugszeichenliste

- 10: Randprägung
- 11: Längsrand
- 12: Querrand
- 13: Innenbereich
- 14: Blech
- 15: Reflexfolie
- 16: Vorderseite
- 17: Loch
- 18: Rückseite
- 19: Randstreifen
- 20: Längskante
- 21: Längsrandbereich
- 22: Rundung
- 23: Rundung

## Patentansprüche

1. Rohling für ein Kraftfahrzeugkennzeichen aus einem Blech (14), wobei das Blech (14) durch mindestens einen mehrlagigen Bereich teilweise verstärkt ist, **dadurch gekennzeichnet, dass** das Blech (14) an mindestens einem von einem Längsrand ausgehenden Längsrandbereich (21) mehrlagig ausgebildet ist und sich eine Randprägung (10) in den mindestens einen mehrlagigen Längsrandbereich (21) erstreckt.

2. Rohling nach Anspruch 1, **dadurch gekennzeichnet, dass** das Blech (14) an gegenüberliegenden Längsrandbereichen (21) mehrlagig, insbesondere doppellagig, ausgebildet ist.

3. Rohling nach Anspruch 1 oder 2, **dadurch gekennzeichnet, dass** sich die Randprägung (10) in den zweilagigen Längsrandbereichen (21) erstreckt.

4. Rohling nach Anspruch 1, **dadurch gekennzeichnet, dass** das Blech (14) im wenigstens einen mehrlagigen Bereich, insbesondere in den zweilagigen Längsrandbereichen (21), mindestens ein durchgehendes Loch (17) und/oder einen Durchbruch aufweist.

5. Rohling nach Anspruch 1, **dadurch gekennzeichnet, dass** das Blech (14) eine Dicke bzw. Wandstärke zwischen 0,3 und 0,8 mm aufweist, vorzugsweise die Dicke bzw. Wandstärke des Blechs (14) zwischen 0,4 und 0,6 mm liegt.

6. Kraftfahrzeugkennzeichen mit einem Blech (14) und gegebenenfalls einer auf einer Vorderseite (16) des Blechs (14) angeordneten Reflexfolie (15), **gekennzeichnet durch** einen Rohling nach einem oder mehreren der Ansprüche 1 bis 5.

7. Verfahren zur Herstellung eines Kraftfahrzeugkennzeichens, insbesondere eines Rohlings für ein Kraftfahrzeugkennzeichen, wobei aus einem Blech (14) ein Zuschnitt gebildet wird und der Zuschnitt gegebenenfalls mit einer Randprägung (10) und/oder Löchern (17) versehen wird, **dadurch gekennzeichnet, dass** das Blech (14) durch Umformen teilweise mehrlagig gemacht wird, wobei aus dem Blech (14) nach dem Umbiegen mindestens eines schmalen Randstreifens (19) durch Besäumen der Zuschnitt gebildet wird und nach dem Umbiegen mindestens eines schmalen Randstreifens (19) des Blechs (14) der Zuschnitt eine umlaüfende Randprägung (10) erhält:

8. Verfahren nach Anspruch 7, **dadurch gekennzeichnet, dass** das Blech (14) durch Kaltumformung mehrlagig gemacht wird, insbesondere durch Umbiegen mindestens eines schmalen Randstreifens (19), vorzugsweise eines entlang mindestens eines Längsrands (11) sich erstreckenden Randstreifens (19), doppellagig gemacht wird.

9. Verfahren nach Anspruch 7 oder 8, **dadurch gekennzeichnet, dass** nur in denjenigen Bereichen, in denen Ränder des Blechs (14) nicht umgebogen sind, das Blech (14) besäumt wird.

10. Verfahren nach Anspruch 8, **dadurch gekennzeichnet, dass** nach dem Umbiegen mindestens eines schmalen Randstreifens (19) wenigstens ein Loch (17), ein Ausschnitt oder dergleichen in das Blech (14) gestanzt wird, vorzugsweise dort, wo das Blech (14) durch Umbiegen mindestens eines Randstreifens (19) mehrlagig, insbesondere doppellagig gemacht worden ist.

## Claims

1. Blank for a motor vehicle registration plate made from a metal sheet (14), the metal sheet (14) being partially reinforced by at least one multiple-ply region, **characterized in that** the metal sheet (14) is of multiple-ply form at at least one longitudinal marginal region (21) emanating from a longitudinal margin, and a marginal embossing (10) extends into the at least one multiple-ply longitudinal marginal region (21).

2. Blank according to Claim 1, **characterized in that** the metal sheet (14) is of multiple-ply, in particular two-ply, form at longitudinal marginal regions (21) lying opposite one another.

3. Blank according to Claim 1 or 2, **characterized in that** the marginal embossing (10) extends into the two-ply longitudinal marginal regions (21).

4. Blank according to Claim 1, **characterized in that** the metal sheet (14) has at least one continuous hole (17) and/or perforation in the at least one multiple-ply region, in particular in the two-ply longitudinal marginal regions (21).

5. Blank according to Claim 1, **characterized in that** the metal sheet (14) has a thickness or wall thickness of between 0.3 and 0.8 mm, preferably the thickness or wall thickness of the metal sheet (14) lying between 0.4 and 0.6 mm.

6. Motor vehicle registration plate with a metal sheet (14) and, if appropriate, with a reflex film (15) arranged on a front side (16) of the metal sheet (14), **characterized by** a blank according to one or more of Claims 1 to 5.

7. Method for producing a motor vehicle registration plate, in particular a blank for a motor vehicle registration plate, a cut-to-size piece being formed from a metal sheet (14), and the cut-to-size piece being provided, if appropriate, with a marginal embossing (10) and/or holes (17), **characterized in that** the metal sheet (14) is made partially multiple-ply by forming, the cut-to-size piece being formed from the metal sheet (14) by trimming after at least one narrow marginal strip (19) is bent round, and the cut-to-size piece acquiring a peripheral marginal embossing (10) after at least one narrow marginal strip (19) of the metal sheet (14) is bent round.

8. Method according to Claim 7, **characterized in that** the metal sheet (14) is made multiple-ply by cold forming, in particular is made two-ply by bending round at least one narrow marginal strip (19), preferably a marginal strip (19) extending along at least one longitudinal margin (11).

9. Method according to Claim 7 or 8, **characterized in that** the metal sheet (14) is trimmed only in those regions in which margins of the metal sheet (14) are not bent round.

10. Method according to Claim 8, **characterized in that** after at least one narrow marginal strip (19) is bent round, at least one hole (17), cutout or the like is punched into the metal sheet (14), preferably where the metal sheet (14) has been made multiple-ply, in particular two-ply, by bending round at least one marginal strip (19).

## Revendications

1. Ébauche pour plaque d'immatriculation de véhicule automobile réalisée à partir d'une tôle (14), la tôle (14) étant renforcée en partie grâce à au moins une région stratifiée, **caractérisée en ce que** la tôle (14) est réalisée de façon stratifiée au niveau d'au moins une zone de bord longitudinal (21) partant d'un bord longitudinal et qu'une empreinte de bord (10) s'étend dans l'au moins une zone de bord longitudinal (21) stratifiée.

2. Ébauche selon la revendication 1, **caractérisée en ce que** la tôle (14) est réalisée de façon stratifiée au niveau des zones de bord longitudinal (21) opposées, notamment en double couche.

3. Ébauche selon la revendication 1 ou 2, **caractérisée en ce que** l'empreinte de bord (10) s'étend dans les zones de bord longitudinal (21) en double couche.

4. Ébauche selon la revendication 1, **caractérisée en ce que** la tôle (14) comporte au moins un trou traversant (17) et/ou une percée dans au moins une région stratifiée, notamment dans les zones de bord longitudinal (21) en double couche.

5. Ébauche selon la revendication 1, **caractérisée en ce que** la tôle (14) présente une épaisseur et/ou une largeur de paroi comprise entre 0,3 et 0,8 mm, l'épaisseur et/ou la largeur de paroi de la tôle (14) étant de préférence comprise entre 0,4 et 0,6 mm.

6. Plaque d'immatriculation de véhicule automobile dotée d'une tôle (14) et le cas échéant d'un film réfléchissant (15) disposé sur un côté avant (16) de la tôle (14), **caractérisée par** la présence d'une ébauche selon l'une quelconque des revendications 1 à 5 ou plusieurs d'entre elles.

7. Procédé de fabrication d'une plaque d'immatriculation de véhicule automobile, notamment d'une ébauche de plaque d'immatriculation de véhicule automobile, un détouré étant formé à partir d'une tôle (14) et le détouré étant pourvu le cas échéant d'une empreinte de bord (10) et/ou de trous (17), **caractérisé en ce que** la tôle (14) est en partie réalisée de façon stratifiée par déformation de la tôle, au moins une bande de bordure étroite (19) étant formée à partir de la tôle (14) après sa flexion, par ourletage ou détourage, et au moins une bande de bordure étroite (19) de la tôle (14) du détouré recevant une empreinte de bord (10) après la flexion d'au moins une bande de bordure étroite.

8. Procédé selon la revendication 7, **caractérisé en ce que** la tôle (14) est réalisée de façon stratifiée par transformation à froid, notamment en double couche par flexion d'au moins une bande de bordure étroite (19), de préférence d'une bande de bordure (19) s'étendant le long d'au moins un bord longitudinal (11).

9. Procédé selon la revendication 7 ou 8, **caractérisé en ce que** la tôle (14) est ourlée uniquement dans les zones dans lesquelles les bords de la tôle (14) ne sont pas courbés.

10. Procédé selon la revendication 8, **caractérisé en ce qu'**après la flexion d'au moins une bande de bordure étroite (19), au moins un trou (17), un détouré ou leur équivalent sont estampés dans la tôle (14), de préférence là où la tôle (14) est stratifiée, notamment doublée, par flexion d'au moins une bande de bordure étroite (19).
